Europäisches Patentamt

European Patent Office

Office européen des brevets

(19)

(11) Numéro de publication : **0 011 007**
**B1**

(12) **FASCICULE DE BREVET EUROPÉEN**

(45) Date de publication du fascicule du brevet :
**11.05.83**

(21) Numéro de dépôt : **79400725.2**

(22) Date de dépôt : **08.10.79**

(51) Int. Cl.³ : **B 30 B 11/24,** B 29 F   3/02

(54) Fourreau à plusieurs lobes pour une machine de traitement à plusieurs vis et son procédé de réalisation.

(30) Priorité : **16.10.78 FR 7829370**

(43) Date de publication de la demande :
**14.05.80 Bulletin 80/10**

(45) Mention de la délivrance du brevet :
**11.05.83 Bulletin 83/19**

(84) Etats contractants désignés :
**AT DE FR IT SE**

(56) Documents cités :
**DE A 2 325 252**
**DE A 2 747 148**
**FR A 1 526 111**
**GB A 883 881**
**US A 1 376 657**
**US A 3 268 949**
**US A 3 696 736**
**US A 4 045 853**

(73) Titulaire : **CREUSOT-LOIRE**
**42 rue d'Anjou**
**F-75008 Paris (FR)**

(72) Inventeur : **Berger, Pierre**
**5 rue Alphonse Merrheim**
**F-42100 Saint-Etienne (FR)**

(74) Mandataire : **Dupuy, Louis et al**
**CREUSOT-LOIRE 15 rue Pasquier**
**F-75383 Paris Cedex 8 (FR)**

Jouve, 18, rue St-Denis, 75001 Paris, France

Fourreau à plusieurs lobes pour une machine de traitement à plusieurs vis et son procédé de réalisation

L'invention a pour objet un nouveau fourreau à plusieurs lobes pour une machine de traitement de matières à plusieurs vis parallèles et certains procédés de réalisation d'un tel fourreau.

Depuis longtemps, on utilise des machines à plusieurs vis, et en particulier des extrudeuses, par exemple pour la fabrication de matière plastique. Ces machines comprennent plusieurs vis parallèles ayant des filets dont le pas peut varier le long de l'axe et qui pénètrent l'une dans l'autre de façon à entraîner la matière le long des filets par la rotation des vis. A cet effet, les vis sont placées à l'intérieur d'un fourreau à plusieurs lobes, chaque lobe ayant une paroi interne cylindrique enveloppant une vis sur la partie de la périphérie de celle-ci extérieure à la zone de pénétration.

Pour contrôler les conditions d'avancement de la matière dans les vis, il est généralement nécessaire que le jeu existant entre la périphérie de la vis et la paroi interne du fourreau soit aussi faible que possible. C'est pourquoi on doit aléser les parois internes du fourreau avec précision et, dans les machines comportant plusieurs vis, la constitution du fourreau en plusieurs lobes rend cette opération délicate et onéreuse.

Par ailleurs, la paroi interne du fourreau peut être soumise par les matières traitées à une usure et/ou une corrosion.

On a donc été amené à utiliser des chemises pour recouvrir les secteurs cylindriques formant les différents lobes du fourreau, chaque chemise ayant la forme d'un segment cylindrique qui s'appuie vers l'extérieur sur la paroi interne d'un évidement ménagé sur un carter massif entourant les deux vis et formant le corps du fourreau proprement dit. Ce carter massif est prévu pour encaisser la pression exercée par la matière entraînée à l'intérieur du fourreau, les chemises résistant seulement à la corrosion et à l'usure.

Lorsque chaque chemise recouvre entièrement le secteur du fourreau correspondant, elle doit être prolongée jusqu'à s'accoler à la chemise adjacente en formant une pointe dans la zone d'interpénétration des vis. Il est difficile d'éviter qu'il existe un petit espace entre les bords adjacents des deux chemises et cet espace doit être soudé et réalisé pour éviter qu'il ne s'y accumule de la matière, ce qui présente un inconvénient notamment dans le cas du traitement des matières plastiques.

Pour éviter cet inconvénient, on a déjà proposé, par exemple dans les brevets des Etats-Unis USP 3.268.949 et 3.696.736 ou bien dans la demande de brevet allemande DE-OS 2.325.252 de limiter les chemises à un angle d'ouverture B inférieur à l'angle A d'ouverture totale du secteur cylindrique, chaque chemise étant prolongée par deux faces concaves de même rayon centrées sur l'axe de la vis et ouvertes chacune d'un angle $C = A - B/2$. Les faces concaves sont ménagées par paires formant un V sur des règles interposées entre les segments adjacents. De plus, chaque segment est muni le long de ses côtés rectilignes parallèles à l'axe, de faces d'appui inclinées par rapport au plan médian du fourreau et s'appliquant sur des faces correspondantes ménagées sur les règles adjacentes. Les deux faces d'appui de chaque règle forment donc un dièdre et la fixation de l'ensemble est obtenue par des vis de serrage qui se vissent sur les règles en prenant appui sur le carter, le serrage des règles produisant, par effet de coin, l'application des segments cylindriques contre la paroi interne du carter massif.

Ainsi, la partie en V pénétrant entre les vis est constituée par l'arête de la règle et on élimine les interstices qui existaient auparavant entre les segments adjacents. En revanche, les pièces doivent être réalisées avec une très grande précision, de façon qu'après le serrage des règles, les faces concaves de celles-ci se trouvent exactement dans le prolongement des faces internes des segments.

L'invention a pour objet des dispositions permettant de réaliser plus simplement et économiquement des fourreaux à plusieurs lobes pour les machines à plusieurs vis. L'invention présente également d'autres avantages qui apparaîtront au cours de la description qui va suivre, en particulier pour la réalisation de fourreaux présentant des parties filtrantes.

Conformément à l'invention, le fourreau est constitué uniquement par les segments et les règles, chaque segment étant formé d'une coquille résistante munie, le long de ses deux côtés parallèles à l'axe, de deux brides de fixation sur lesquelles sont ménagées des faces d'assemblage fixées sur les faces d'appui correspondantes des règles par les moyens de fixation prenant appui sur les brides, la résistance des coquilles et des moyens de fixation étant suffisants pour supporter la pression s'exerçant à l'intérieur du fourreau.

Pour la réalisation d'un tel fourreau, selon l'invention, ayant réalisé séparément les coquilles munies de brides de fixation et les règles d'assemblage, on dispose les règles en les reliant entre elles provisoirement par des organes de jonction de telle sorte que les axes des secteurs cylindriques coïncident deux à deux et l'on fixe chaque coquille sur deux règles de telle sorte que son axe coïncide avec les axes des faces concaves correspondantes desdites règles et que l'ensemble de chaque coquille et des règles adjacentes forment un secteur cylindrique d'angle au centre $A = B + 2C$.

Dans un mode de réalisation particulier, le fourreau comportant n lobes, chaque coquille est ouverte d'un angle $B = 2\pi/n$ et chaque règle est munie de deux faces d'assemblage parallèles et écartées d'une distance (e) égale à l'entraxe des vis.

Pour effectuer facilement l'alésage d'un tel fourreau, ayant réalisé n coquille ouverte de $2\pi/n$

et munie chacune de deux brides de fixation, on accole les coquilles le long de leurs faces d'assemblage de façon à former un cylindre complet, on alèse simultanément les coquilles au rayon (r) et on sépare les coquilles après alésage pour les fixer sur les règles alésées séparément, chaque face d'assemblage d'une bride étant fixée sur une face plane d'une règle.

Selon une variante de l'invention pour la réalisation d'un fourreau muni de sections filtrantes, au moins l'une des coquilles est constituée sur au moins une partie de sa longueur d'un panneau galbé en forme de secteur cylindrique muni d'orifices de filtrations, ledit panneau étant fixé le long de ses côtés parallèle à l'axe sur deux pièces formant bride de fixation sur les règles qui l'encadrent.

Dans un mode de réalisation particulier, chaque panneau filtrant cylindrique est constitué d'une série d'arceaux parallèles en forme de secteur circulaire fixés sur leurs côtés extérieurs sur des barrettes de liaison parallèle à l'axe des cylindres et réparties sur la périphérie des arceaux, ces derniers présentant chacun une face interne cylindrique de rayon (r), lesdites faces internes étant placées dans le prolongement l'une de l'autre pour constituer la surface interne cylindrique du panneau et ayant leurs bords latéraux séparés les uns des autres par des intervalles de largeur e constituant les orifices de filtration du panneau.

L'invention va maintenant être décrite, en se référant à plusieurs modes de réalisation, donnés à titre d'exemple et représentés sur les dessins annexés.

Les figures 1, 2, 3, 4 représentent différentes étapes successives du procédé de réalisation d'un fourreau selon l'invention.

La figure 5 représente schématiquement un fourreau réalisé selon l'invention.

La figure 6 représente une variante d'un fourreau réalisé selon l'invention.

La figure 7 est une vue en coupe transversale selon VII-VII, figure 8 d'un fourreau à deux lobes comportant des parties filtrantes réalisées selon l'invention.

La figure 8 est une vue partielle en coupe longitudinale selon VIII-VIII du fourreau de la figure 7, à l'intérieur duquel est représentée une seule vis.

La figure 9 est une vue partielle en perspective d'un secteur filtrant réalisé selon l'invention.

Les figures 10, 11, 12 représentent, en coupe transversale, trois étapes d'un mode de réalisation d'un secteur filtrant selon l'invention.

Comme on l'a représenté sur la figure 5, dans le cas d'une machine à deux vis parallèles, le fourreau selon l'invention se compose de deux coquilles 1 fixées sur deux règles 2. Sur la figure, on a représenté en traits mixtes les deux vis 3 qui sont entraînées en rotation de façon à assurer l'avancement d'une matière à l'intérieur du fourreau. On sait que les vis sont entraînées dans le même sens de rotation si les filetages sont identiques et en sens inverse lorsque les filetages sont inversés. Cependant, dans tous les cas, les deux filetages pénètrent l'un dans l'autre dans une zone médiane 30 placée entre les deux axes des vis.

Pour que la matière soit entraînée dans de bonnes conditions dans la machine, il est nécessaire que les deux vis soient placées à l'intérieur d'un fourreau dont le profil interne enveloppe la périphérie des vis avec un jeu aussi faible que possible, la tolérance dépendant notamment du degré de viscosité de la matière que l'on désire entraîner dans les vis. Il résulte que la paroi interne 10 du fourreau sera constituée de deux secteurs cylindriques accolés ; chacun des secteurs a un axe coïncidant avec celui d'une vis et un rayon r légèrement supérieur à celui de la vis mais qui doit cependant être contrôlé avec précision en fonction du jeu tolérable. En outre, chacun des secteurs est ouvert d'un angle au centre A qui dépend de la distance d entre les axes des vis et du rayon de celle-ci.

On réalise alors séparément deux coquilles 1 et deux règles 2.

Chaque coquille 1 couvre une partie B de la périphérie de la vis. De ce fait, chaque règle 2 couvre la partie restante du fourreau dans la zone de pénétration des vis et se compose donc de deux faces concaves 20 formant un V. Chaque face concave a un axe coïncidant avec celui de la vis correspondante, un rayon r égal à celui de la coquille et est ouverte d'un angle au centre C égal à A − B/2 de telle sorte que l'ensemble de la coquille et des deux faces concaves adjacentes soit ouvert de l'angle A.

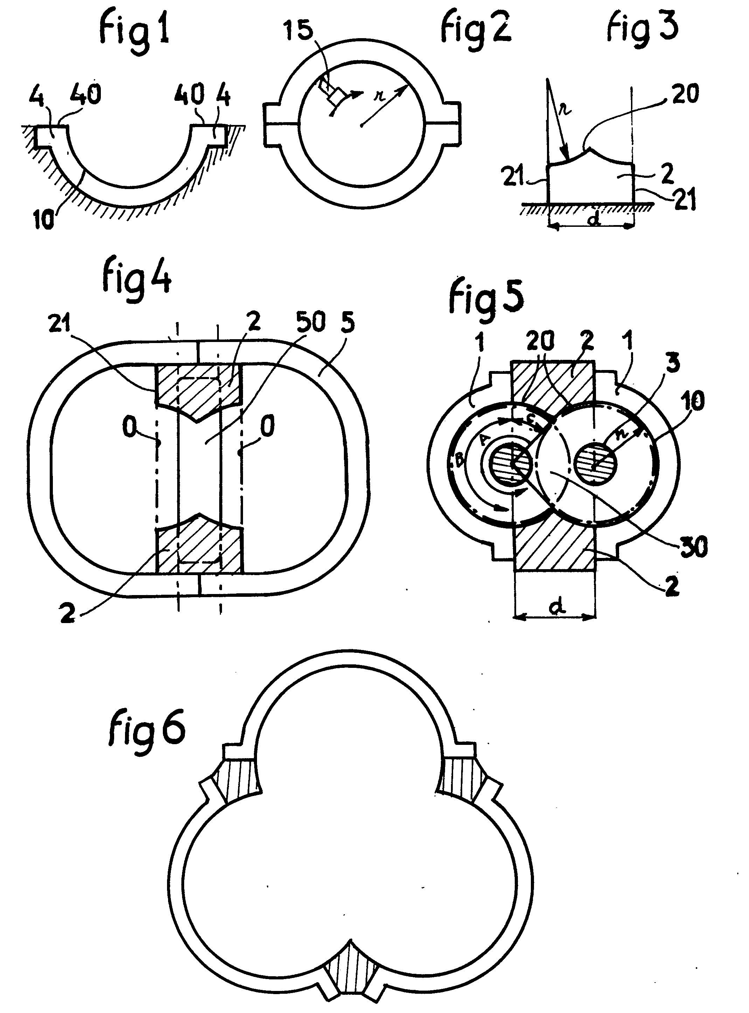

Une telle disposition permet de réaliser un fourreau selon un procédé particulièrement économique dont les différentes étapes sont schématisées par les figures 1 à 5.

En effet, les coquilles peuvent être réalisées facilement par chaudronnerie ou moulage, comme on l'a représenté sur la figure 1. D'autre part, chaque coquille sera munie le long de ses bords rectilignes, de deux brides 4 sur lesquelles seront ménagées des faces d'assemblage 40 situées de préférence dans des plans passant par l'axe du secteur cylindrique constituant la paroi interne 10 de la coquille.

Dans un mode de réalisation préférentiel, l'angle B sera égal à 180° de telle sorte que les faces 40 seront situées dans un même plan axial.

Il en résulte que, après avoir usiné avec exactitude les faces d'assemblage 40, on pourra accoler deux coquilles 1 pour former un cylindre complet de façon à aléser simultanément, au moyen d'un outil 15, les deux coquilles au rayon r.

On aura d'autre part réalisé deux règles 2 qui comprendront deux faces concaves 20 formant un V, alésées au rayon r et deux faces d'assemblage 21 usinées avec exactitude de telle sorte qu'elles soient parallèles et écartées d'une distance égale à l'entraxe d des vis, chaque face 21 étant ainsi située dans un plan passant par l'axe de la face concave 20 adjacente et perpendiculaire au plan passant par les axes des vis.

Les deux règles 2, comme on l'a représenté sur la figure 4, sont ensuite mises en place de façon à faire coïncider les axes des faces concaves situées l'une en face de l'autre. A cet effet, les deux règles 2 sont réunies provisoirement par des organes de jonction qui, comme on l'a représenté sur la figure 4, peuvent être des arceaux 5 s'écartant suffisamment des règles pour permettre la mise en place des coquilles ou bien des pattes d'assemblage 50 placées aux extrémités des deux règles.

Les règles étant ainsi mises en place avec précision, il est possible de fixer sur leur face 21 les faces d'assemblage 40 des deux coquilles de façon à obtenir le fourreau complet représenté sur la figure 5. La fixation des coquilles sur les règles 2 peut être réalisée par tout moyen par exemple des boulons traversant les brides 4 et s'engageant dans des orifices filetés ménagés dans les règles 2 ou bien des tirants traversant la règle et les deux brides adjacentes et munis à leurs extrémités d'écrous s'appuyant sur les deux brides.

Le mode de réalisation qui vient d'être décrit est donc particulièrement simple et utilisable surtout lorsque la machine n'est pas soumise à une pression intérieure très forte. Cependant, il est évident qu'il suffit, pour supporter une pression, de prévoir des coquilles assez résistantes et un mode de fixation adéquat.

On notera également que le procédé selon l'invention permet de réaliser des fourreaux ouvrants, ce qui présente un avantage dans certaines applications comme on l'a indiqué par exemple dans le document de brevet français 2 418 295 déposé par la même Société.

De plus, les coquilles peuvent être réalisées par des procédés simples et économiques tels que moulage, chaudronnerie ou assemblages mécaniques d'éléments simples. Il sera donc facile de prévoir la climatisation des coquilles et éventuellement des règles en ménageant à l'intérieur de celles-ci des évidements dans lesquels on pourra faire circuler des fluides caloporteurs pour chauffer ou refroidir le fourreau, selon les besoins.

L'invention vient d'être décrite en se référant à un mode de réalisation particulier comportant notamment deux vis. Cependant, il est bien évident que les dispositions selon l'invention peuvent être appliquées à d'autres types de fourreaux. C'est ainsi que, si le fourreau comportait trois vis, on pourrait utiliser les mêmes règles 2 munies de faces parallèles d'assemblage écartées d'une distance égale à l'entraxe des vis et associées à des coquilles ouvertes d'un angle B égal à 120°. Pour une machine à quatre vis, les mêmes règles seraient associées à des coquilles ouvertes de 90°.

Mais on peut également utiliser des coquilles ouvertes de 180° pour réaliser des fourreaux à plus de deux lobes si l'on modifie la forme des règles. Il suffit en effet, comme on l'a représenté sur la figure 6, que chaque règle soit munie de faces d'assemblage faisant entre elles le complément de l'angle C d'ouverture des faces concaves.

Ainsi, grâce à des jeux de règles différents, on pourrait, avec des coquilles demi-cylindriques réaliser des fourreaux ayant le nombre de lobes voulu.

Bien entendu, on pourrait aussi généraliser et, si on y voyait un avantage, utiliser d'autres modes de réalisation que celui qui vient d'être décrit.

En particulier, bien que cela présente un avantage certain, on n'est pas obligé d'aléser simultanément toutes les coquilles et par conséquent de donner à celles-ci un angle au centre égal à $2\pi/n$. L'opération d'alésage peut d'ailleurs être superflue si le mode de réalisation des coquilles permet d'obtenir une précision suffisante, notamment sur le rayon interne r.

D'autre part, les coquilles peuvent être constituées de secteurs cylindriques réalisés séparément puis fixés de toute manière adéquate sur des pièces formant les brides de fixation 4.

Un tel mode de réalisation peut être adopté lorsque la coquille doit présenter des propriétés particulières, par exemple de résistance à l'abrasion.

Mais c'est le cas également lorsque le fourreau doit présenter des parties ayant une certaine porosité et le procédé qui vient d'être décrit s'applique particulièrement bien à la réalisation de fourreau présentant des zones filtrantes.

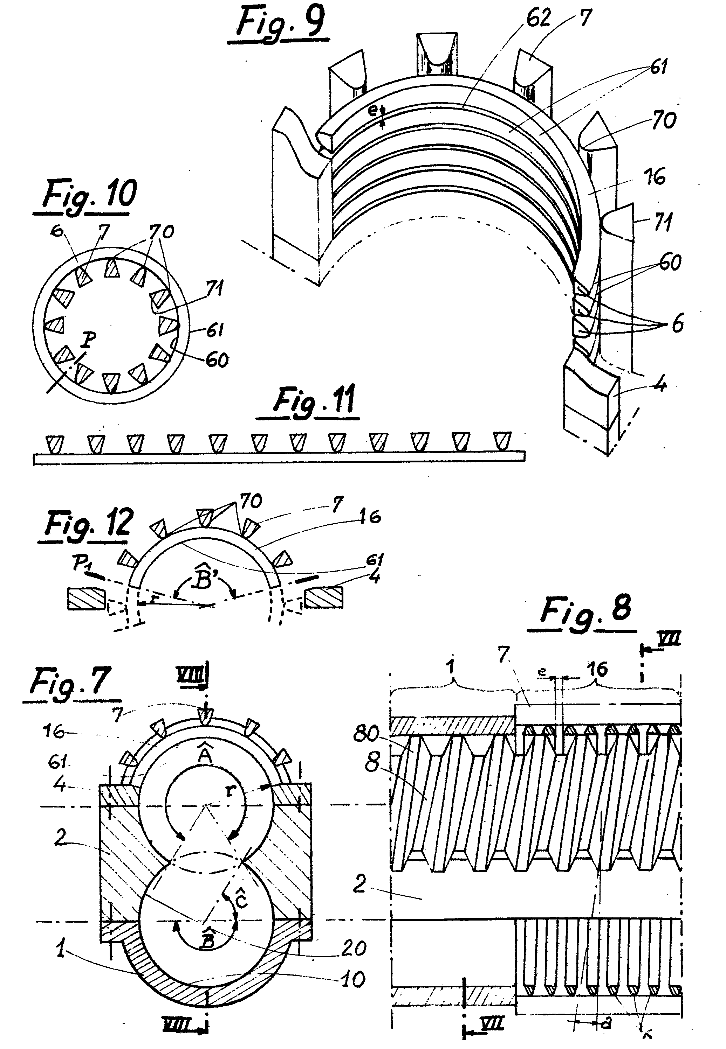

En effet, comme on l'a représenté sur les figures 7 et 8, le procédé qui vient d'être décrit permet d'associer aux coquilles pleines 1 des coquilles filtrantes 16, l'ensemble étant solidarisé par les règles 2. On obtient ainsi de façon économique un fourreau ayant des zones filtrantes placées à des endroits choisis correspondant par exemple à certaines zones des vis tournant à l'intérieur du fourreau.

On peut d'ailleurs disposer d'un jeu de coquilles filtrantes ayant différentes porosités et de coquilles pleines qui, associées aux coquilles filtrantes permettent de faire varier la longueur, l'angle d'ouverture et la dimension des orifices des zones filtrantes.

Les coquilles filtrantes peuvent être réalisées aux dimensions voulues, par exemple par frittage ; mais on peut aussi former des secteurs filtrants à partir de fourreaux ayant la porosité désirée et pouvant être fabriqués à l'avance ou bien se trouver dans le commerce.

Chaque secteur filtrant 16 sera lui-même fixé le long de ses côtés parallèles à l'axe sur des pièces susceptibles de former les brides de fixation sur les règles.

Sur la figure 9, on a représenté partiellement en perspective une coquille filtrante réalisée suivant un procédé original particulièrement intéressant dont les étapes essentielles sont illustrées par les figures 10, 11 et 12.

Selon l'invention, les coquilles sont réalisées à partir d'un tube fendu représenté en coupe transversale sur la figure 10 et qui est constitué d'un fil 6 enroulé en hélice autour d'une pluralité de barrettes longitudinales 7 parallèles à l'axe de l'hélice. Le fil 6 a une section droite triangulaire de façon à présenter vers l'extérieur une face convexe cylindrique 61 et il est enroulé à un pas assez faible pour former des spires légèrement écartées les unes des autres d'un espace 62 de largeur (e). Les faces cylindriques 61 des spires accolées se plaçant dans le prolongement les unes des autres, l'ensemble constitue un tube cylindrique le long duquel est ménagée une fente de largeur (e) enroulée en hélice.

Les barrettes longitudinales 7 ont également une section droite triangulaire et présentent donc chacune vers l'intérieur une face plane 7, et vers le fil une arête 70 sur laquelle s'appuie l'arête 60 du fil hélicoïdal, les deux arêtes se coupant sensiblement à angle droit.

Ainsi, ayant d'abord disposé les barrettes de façon rayonnante autour de l'axe on enroule en hélice le fil 6 autour de l'ensemble en adoptant un pas qui permet d'obtenir une fente ayant la largeur (e) désirée. Le fil 6 et les barrettes 7 sont en contact par leurs arêtes 60, 70 et peuvent être solidarisées par des soudures aux points de contact.

De tels tubes fendus peuvent être facilement fabriqués sur demande aux cotes désirées, ou même être trouvés dans le commerce.

Selon l'invention pour réaliser une coquille filtrante, on sectionne un tel tube par un plan P parallèle à l'axe de révolution (figure 2) puis on le met à plat (figure 3).

On obtient ainsi une sorte de grille (figure 3) qu'il est possible de rouler ou d'emboutir de telle sorte qu'elle présente une face interne concave ayant le rayon (r) recherché et constitué par les faces 61 des spires, les barrettes 7 étant placées sur la face extérieure convexe.

Cette grille tubulaire est alors sectionnée suivant des plans respectivement parallèles (P1) et perpendiculaires à l'axe de révolution de façon à former un secteur 16 de la longueur voulue et d'angle au centre B′ qui est fixé sur deux plats 4.

Bien entendu, ces derniers ont leurs faces latérales 41 alésées au même rayon r. On obtient ainsi une coquille filtrante ayant la longueur et l'angle au centre B désiré, l'angle B′ étant déterminé en fonction de l'épaisseur des plats 4 à moins que la zone filtrante ne doive pas couvrir toute l'ouverture du secteur, les pièces 4 assurant alors le complément.

On pourrait d'ailleurs envisager de fixer les pièces 4 sur les arêtes 60 des spires, l'angle d'ouverture B′ du secteur filtrant 16 étant alors égal à l'angle B de la coquille.

Comme indiqué précédemment, il est possible d'associer à des règles 2 les coquilles filtrantes ainsi obtenues pour former un fourreau à plusieurs lobes en faisant alterner des coquilles filtrantes 6 et des coquilles pleines 1.

En outre, il peut être intéressant dans certaines applications de faire varier progressivement la porosité de la zone filtrante. Ce résultat peut être obtenu facilement dans le procédé selon l'invention si, à la fabrication du tube fendu, on fait varier de façon continue le pas d'enroulement des spires et par conséquent la largeur (e) des fentes.

On peut remarquer que, grâce à la constitution originale des coquilles filtrantes selon l'invention on obtiendra un raclage particulièrement efficace de la face interne du fourreau. En effet, comme cela apparaît sur la figure 6 où l'on a représenté l'une des deux vis 8 placées à l'intérieur du fourreau, celles-ci ont généralement un pas peu important et de ce fait, les filets 80 font un angle (a) assez faible avec les fentes séparant les spires 6. Il en résulte que à intervalles réguliers, la totalité de chaque fente est balayée par un filet 80 et les particules solides qui auraient pu rester coincées entre deux arceaux successifs sont soit immédiatement reprises par la vis, soit repoussées vers l'extérieur cette expulsion étant facilitée par le profil de la fente s'élargissant vers l'extérieur, grâce à la section triangulaire des spires. Ainsi, la coquille filtrante, toujours bien raclée, risque moins de se colmater et les matières déposées sur le filtre sont réintroduites immédiatement dans le processus d'avancement à l'intérieur des vis.

Bien entendu, si le mode de réalisation des parois filtrantes qui vient d'être décrit s'adapte particulièrement bien à la mise en œuvre de l'invention, celle-ci ne se limite cependant pas à un tel mode de réalisation.

Les coquilles filtrantes pourraient être réalisées en effet par des procédés classiques soit individuellement soit à partir d'un tube ayant le diamètre interne r voulu que l'on diviserait en secteurs d'angle au centre B′ et de longueur égale à celle de la zone filtrante à réaliser. Ces secteurs seraient ensuite fixés sur des pièces formant brides, d'épaisseur telle que l'ensemble ait l'angle au centre B désiré.

## Revendications

1. Fourreau à plusieurs lobes pour une machine de traitement comprenant au moins deux vis (3) d'axes parallèles pénétrant l'une dans l'autre et entraînées en rotation à l'intérieur dudit fourreau, celui-ci ayant une paroi interne constituée de plusieurs lobes correspondant chacun à une vis, chaque lobe formant un secteur cylindrique d'angle au centre A et de rayon r, enveloppant la vis correspondante sur la partie de la périphérie de celle-ci extérieure à la zone de pénétration, chaque secteur étant limité par un segment (1) en forme de portion de cylindre de rayon (r), centré sur l'axe et ouvert d'un angle B inférieur à A, prolongé de part et d'autre par deux faces concaves (20) de même rayon (r), centrées sur l'axe et ouvertes chacune d'un angle C = A − B/2, lesdites faces concaves (20) étant ménagées par paires formant un V sur des règles (2) interposées entre les segments (1) adjacents, les faces (20) de chaque paire ayant leurs axes écartés d'une distance (d) égale à l'entraxe des vis et chaque segment (1) étant muni, le long de ses côtés parallèles à l'axe, de deux faces planes 40 s'appliquant sur des faces planes correspondantes (21) des règles (2) adjacentes, caractérisé par le fait que le fourreau est constitué uniquement par les segments (1) et les règles (2), chaque segment étant formé d'une coquille résistante (1) munie, le long de ses deux côtés parallèles à l'axe, de deux brides de fixation (4) sur lesquelles sont ménagées des faces d'assemblages (40) fixées sur les faces d'appui correspondantes (21) des règles (2) par des moyens de fixation prenant appui sur les brides (4), la résistance des coquilles et les moyens de fixation étant suffisants pour supporter la pression à l'intérieur du fourreau.

2. Fourreau à plusieurs lobes selon la revendication 1, caractérisé par le fait que le fourreau comportant n lobes, chaque coquille (1) est ouverte d'un angle $B = 2\pi/n$ et chaque règle (2) est munie de deux faces d'assemblage (21) parallèles et écartées d'une distance (d) égale à l'entraxe des vis (3).

3. Fourreau à plusieurs lobes selon l'une des revendications 1 et 2, caractérisé par le fait qu'au moins l'une des coquilles (1) est constituée sur au moins une partie de sa longueur, d'un panneau galbé 16 en forme de secteur cylindrique et muni d'orifices de filtration, ledit panneau étant fixé le long de ses côtés parallèles à l'axe sur deux pièces 4 formant les brides (4) de fixation sur les règles (2) qui l'encadrent.

4. Fourreau à plusieurs lobes selon la revendication 3, caractérisé par le fait que chaque panneau filtrant cylindrique (16) est constitué d'une série d'arceaux (6) parallèles en forme de secteurs circulaires fixés sur leur côté extérieur (60) sur des barrettes de liaison (7) parallèles à l'axe du cylindre et réparties sur la périphérie des arceaux, ces derniers présentant chacun une face interne (61) cylindrique de rayon (r) lesdites faces internes (61) étant placées dans le prolongement l'une de l'autre pour constituer la surface interne cylindrique du panneau et ayant leurs bords latéraux séparés les uns des autres par des intervalles (62) de largeur (e) constituant les orifices de filtration du panneau.

5. Fourreau à plusieurs lobes selon la revendication 4, caractérisé par le fait que chaque arceau (6) a une section droite sensiblement en forme de triangle dont la base correspond à la face interne cylindrique (61) et dont le sommet correspond à une arête extérieure (60) de l'arceau sur laquelle sont soudées les barrettes de liaison (7).

6. Procédé de réalisation d'un fourreau à plusieurs lobes selon l'une des revendications précédentes, dont la paroi interne est constituée de (n) secteurs cylindriques, caractérisé par le fait que, ayant réalisé séparément n coquilles (1) munies de brides de fixation (4) et n règles d'assemblage (2), on dispose les règles (2) en les reliant entre elles provisoirement par des organes de jonction (5), de telle sorte que les axes des secteurs cylindriques (20) coïncident deux à deux et l'on fixe chaque coquille (1) sur deux règles (2) de telle sorte que son axe coïncide avec les axes des faces concaves correspondantes desdites règles (2) et que l'ensemble de chaque coquille (1) et des règles (2) adjacentes forme un secteur cylindrique d'angle au centre $A = B + 2C$.

7. Procédé de réalisation d'un fourreau selon la revendication 6, caractérisé par le fait que, ayant réalisé n coquilles (1) ouvertes de $2\pi/n$ munies chacune de deux brides de fixation (4), on accole les coquilles (1) le long de leurs faces d'assemblage 40 de façon à former un cylindre complet, on alèse simultanément lesdites coquilles (1) au rayon r et l'on sépare les coquilles (1) après alésage pour les fixer sur les règles (2) alésées séparément, chaque face d'assemblage (40) d'une bride étant fixée sur une face plane (21) d'une règle.

8. Procédé de réalisation d'un fourreau à plusieurs lobes selon la revendication 6 et comportant, à des emplacements déterminés, des zones filtrantes ayant chacune une longueur (1), un angle d'ouverture B' et une largeur d'orifice (e) déterminés, caractérisé par le fait que, à partir d'une paroi munie d'orifice de largeur (e), on réalise des secteurs cylindriques (16) de diamètre interne r avant la longueur (1) et l'angle d'ouverture (B') désirés et que l'on fixe chaque secteur (16) sur deux pièces (4) formant brides de façon à constituer une coquille filtrante d'angle au centre B pouvant être fixée sur des règles (2) par l'intermédiaire desdites brides (14) pour former un élément de fourreau.

9. Procédé de réalisation d'un fourreau filtrant, selon la revendication 8, caractérisé par le fait que la paroi filtrante est constituée par un tube cylindrique que l'on coupe le long d'une génératrice et que l'on met à plat puis que l'on y découpe un panneau ayant les dimensions de la zone filtrante à réaliser, que l'on donne audit panneau la forme d'un secteur cylindrique (16) de rayon interne r et que l'on fixe ledit secteur sur deux pièces susceptibles de former des brides de fixation (4).

10. Procédé de réalisation d'un fourreau filtrant selon la revendication 9 caractérisé par le fait que le tube cylindrique (160) à partir duquel sont réalisés les panneaux filtrants est constitué par une pluralité de barrettes (7) régulièrement réparties autour d'un axe et sur lesquelles est enroulé en hélice un fil (6) ayant en section droite un profil extérieur plat et dont les spires sont écartées les unes des autres par une fente (62) de largeur e, que ledit tube est sectionné suivant un plan P passant par l'axe coupant l'ensemble des spires, mis à plat puis retourné et mis en forme d'un panneau galbé (16) ayant une face interne cylindrique de rayon r constituée par les faces plates (61) des spires auparavant placées sur l'extérieur du tube initial, les barrettes étant placées de façon rayonnante sur la face extérieure.

## Claims

1. Sleeve with several lobes for a processing machine comprising at least two screws (3) with parallel axes which penetrate into one another and are driven in rotation within the said sleeve, the latter having an inner wall consisting of several lobes, each corresponding to a screw, each lobe forming a cylindrical sector with an angle A at the centre and a radius r, surrounding the corresponding screw over the part of the periphery of the latter outside the penetration zone, each sector being limited by a segment (1) in the form of a cylindrical portion of radius (r), centred on the axis and opened at an angle B less than A, extended on either side by two concave faces (20) of the same radius (r) which are centred on the axis and are each opened at an angle C = A − B/2, the said concave faces (20) being arranged in pairs forming a V on rules (2) located between the adjacent segments (1), the axes of the faces (20) of each pair being spaced from one another at a distance (d) equal to the centre-to-centre distance between the screws, and each segment (1) being provided, along its sides parallel to the axis, with two plane faces (40) which are applied to corresponding plane faces (21) of the adjacent rules (2), characterised in that the sleeve consists solely of the segments (1) and the rules (2), each segment being formed by a resistant shell (1) provided, along its two sides parallel to the axis, with two fastening flanges (4) on which are made assembly faces (40) fastened to the corresponding bearing faces (21) of the rules (2) by fastening means bearing on the flanges (4), the resistance of the shells and the fastening means being sufficient to withstand the pressure on the inside of the sleeve.

2. Sleeve with several lobes according to Claim 1, characterised in that, with the sleeve having n lobes, each shell (1) is opened at an angle B = 2π/n, and each rule (2) is provided with two parallel assembly faces (21) spaced from one another at a distance (d) equal to the centre-to-centre distance between the screws (3).

3. Sleeve with several lobes according to one of Claims 1 and 2, characterised in that at least one of the shells (1) consists, over at least some of its length, of a curved panel (16) in the form of a cylindrical sector and provided with filtering orifices, the said panel being fixed, along its sides parallel to the axis, to two pieces (4) forming the flanges (4) for fastening to the rules (2) which frame it.

4. Sleeve with several lobes according to Claim 3, characterised in that each cylindrical filter panel (16) consists of a series of parallel hoops (6) in the form of circular sectors fastened on their outer side (60) to connecting bars (7) parallel to the axis of the cylinder and distributed over the periphery of the hoops, the latter each having a cylindrical inner face (61) of radius (r), the said inner faces (61) being located in the extension of one another so as to form the cylindrical inner surface of the panel and their lateral edges being separated from one another by gaps (62) of width (e) forming the filtering orifices of the panel.

5. Sleeve with several lobes according to Claim 4, characterised in that each hoop (6) has a substantially triangular cross-section, the base of which corresponds to the cylindrical inner face (61) and the apex of which corresponds to an outer edge (60) of the hoop to which the connecting bars (7) are welded.

6. Process for producing a sleeve with several lobes according to one of the preceding claims, the inner wall of which consists of (n) cylindrical sectors, characterised in that, when n shells (1) provided with fastening flanges (4) and n assembly rules (2) have been made separately, the rules (2) are arranged by connecting them to one another temporarily by joining members (5), in such a way that the axes of the cylindrical sectors (20) coincide two by two, and each shell (1) is fastened to two rules (2) in such a way that its axis coincides with the axes of the corresponding concave faces of the said rules (2) and that the assembly of each shell (1) and of the adjacent rules (2) forms a cylindrical sector with an angle at the centre of A = B + 2C.

7. Process for making a sleeve according to Claim 6, characterised in that, when n shells (1) opened at 2π/n have been made, each provided with two fastening flanges (4), the shells (1) are joined along their assembly faces (40) to form a complete cylinder, the said shells (1) are bored simultaneously to the radius r, and, after boring, the shells (1) are separated so as to fasten them separately to the bored rules (2) each assembly face (40) of a flange being fastened to a plane face (21) of a rule.

8. Process for making a sleeve with several lobes according to Claim 6, and having, in specific places, filter zones, each having a specific length (1), opening angle (B') and orifice width (e), characterised in that from a wall provided with an orifice of width (e) cylindrical sectors (16) of inner diameter r, having the desired length (1) and opening angle (B'), are made, and in that each sector (16) is fastened to two pieces (4) forming flanges so as to constitute a filter shell of angle B at the centre, which can be fastened to rules (2) by means of the said flanges (14) to form a sleeve element.

9. Process for making a filter sleeve according to Claim 8, characterised in that the filter wall consists of a cylindrical tube which is cut along a generatrix line and is flattened out, in that a panel having the dimensions of the filter zone to be made is then cut out from it, in that the said panel is given the shape of a cylindrical sector (16) of inner radius r, and in that the said sector is fastened to two pieces capable of forming fastening flanges (4).

10. Process for making a filter sleeve according to Claim 9, characterised in that a cylindrical tube (160) from which the filter panels are made consists of a plurality of bars (7) which are distributed evenly round an axis and on which is coiled spirally a wire (6) which has a flat outer profile in cross-section and the turns of which are spaced from one another by a slit (62) of width e, and in that the said tube is cut into sections along a plane P passing through the axis intersecting all the turns, flattened out, then turned over and put in the form of a curved panel (16) having a cylindrical inner face of radius r consisting of the flat faces (61) of the turns placed beforehand on the outside of the initial tube, the bars being placed in a radiating manner on the outer face.

**Ansprüche**

1. Hülse mit mehreren Ausbuchtungen für eine Bearbeitungsmaschine, mit wenigstens zwei Schrauben (3) mit parallelen Achsen, von denen die eine die andere durchsetzt und die drehbar im Inneren der Hülse angeordnet sind, die mit einer Innenwand versehen ist, welche mit mehreren Ausbuchtungen versehen ist, von welchen jede einer Schraube zugeordnet ist und einen zylindrischen Sektor mit einem Zentriwinkel A und einem Radius r bildet, der die entsprechende Schraube auf jenem Umfangsabschnitt derselben umhüllt, der außerhalb der Durchdringungszone gelegen ist, wobei jeder Sektor von einem Segment (1) in Form eines Zylinderabschnittes mit Radius (r) begrenzt wird, der auf der Achse zentriert ist und um einen Winkel B geöffnet ist, der kleiner als A ist, welcher Sektor auf beiden Seiten von zwei konkaven Flächen (20) vom gleichen Radius (r) verlängert wird, die auf der Achse zentriert sind und jeweils einen Winkel C = A − B/2 bilden, wobei die konkaven Flächen (20) in Paaren angeordnet sind, die ein V auf Leitleisten (2) bilden, die zwischen angrenzenden Segmenten (1) angeordnet sind, wobei die Achsen der Flächen (20) jedes Paares um einen Abstand (d) voneinander abweichen, der dem Mittelabstand der Schrauben entspricht und jedes Segment (1) entlang seinen parallel zur Achse verlaufenden Seiten mit zwei planen Flächen (40) versehen ist, die an entsprechenden planen Flächen (21) der angrenzenden Leitleisten (2) anliegen, dadurch gekennzeichnet, daß die Hülse nur von den Segmenten (1) und den Leitleisten (2) gebildet ist, wobei jedes Segment aus einer widerstandsfähigen Schale (1) besteht, die entlang ihrer beiden parallel zur Achse verlaufenden Seiten mit zwei Befestigungsschellen (4) versehen ist, auf welchen Zusammenbauflächen (40) ausgebildet sind, die auf den entsprechenden Abstützflächen (21) der Leitleisten (2) mittels Befestigungseinrichtungen befestigt sind, die auf den Schellen (4) abgestützt sind, wobei die Festigkeit der Schalen und die Befestigungseinrichtungen ausreichen, dem Druck im Inneren der Hülse standzuhalten.

2. Hülse mit mehreren Ausbuchtungen nach Anspruch 1, dadurch gekennzeichnet, daß für eine Hülse mit n Ausbuchtungen jede Schale (1) einen Winkel B = 2 π/n bildet und jede Leitleiste (2) mit zwei Zusammenbauflächen (21) versehen ist, die parallel in einem Abstand (d) voneinander verlaufen, der gleich dem Mittelabstand der Schrauben (3) ist.

3. Hülse mit mehreren Ausbuchtungen nach Anspruch 1 und 2, dadurch gekennzeichnet, daß wenigstens eine der Schalen (1) über wenigstens einen Abschnitt ihrer Länge als ausgebauchte Platte (16) in Form eines zylindrischen Sektors ausgebildet und mit Filteröffnungen versehen ist, wobei die Platte entlang ihren parallel zur Achse verlaufenden Seiten auf zwei Teilen (4) befestigt ist, welche die Befestigungsschellen (4) auf den Leitleisten (2) bilden, die sie umgeben.

4. Hülse mit mehreren Ausbuchtungen nach Anspruch 3, dadurch gekennzeichnet, daß jede der zylindrischen Filterplatten (16) von einer Reihe von parallelen Bögen (6) in Form von Kreissektoren gebildet ist, die an ihrer Außenseite (60) auf Verbindungsstegen (7) befestigt sind, die parallel zur Achse des Zylinders verlaufen und über den Umfang der Bögen verteilt sind, wobei jeder der Bögen eine zylindrische Innenfläche mit einem Radius r aufweist, daß die Innenflächen (61) eine in der Verlängerung der anderen angeordnet sind, um die zylindrische Innenfläche der Platte zu bilden und daß die seitlichen Ränder der Innenflächen voneinander durch Zwischenräume (62) von einer Breite (e) getrennt sind, welche die Filteröffnungen der Platte bilden.

5. Hülse mit mehreren Ausbuchtungen nach Anspruch 4, dadurch gekennzeichnet, daß jeder der Bögen (6) einen im wesentlichen dreieckigen Querschnitt aufweist, wobei die Grundlinie des Dreiecks der zylindrischen Innenfläche (61) und sein Scheitel einer Außenkante (60) des Bogens entspricht, auf welcher die Verbindungsstege (7) angeschweißt sind.

6. Verfahren zur Herstellung einer Hülse mit mehreren Ausbuchtungen nach einem der vorhergehenden Ansprüche, deren Innenwand von (n) zylindrischen Sektoren gebildet wird, dadurch gekennzeichnet, daß nach getrennter Herstellung von n Schalen (1), die mit Befestigungsschellen (4) versehen sind, und von n Leitleisten (2) für den Zusammenbau die Leitleisten (2) so angeordnet werden, daß sie provisorisch mittels Verbindungsorganen (5) miteinander so verbunden werden, daß je zwei der Achsen der zylindrischen Sektoren (20) zusammenfallen und daß jede Schale (1) auf zwei Leitleisten (2) so befestigt wird, daß ihre Achse mit den Achsen der entsprechenden konkaven Flächen der Leitleisten (2) zusammenfällt und daß die aus jeder Schale (1) und den angrenzenden Leitleisten (2) bestehende Anordnung einen zylindrischen Sektor mit dem Zentriwinkel A = B + 2C bildet.

7. Verfahren zur Herstellung einer Hülse nach Anspruch 6, dadurch gekennzeichnet, daß nach Herstellung von n Schalen (1), die einen Winkel von 2π/n bilden und jeweils mit zwei Befestigungsschellen (4) versehen sind, die Schalen (1) entlang ihrer Zusammenbauflächen (40) so zusammengefügt werden, daß sie einen vollständigen Zylinder bilden, daß gleichzeitig die Schalen (1) auf den Radius r aufgedreht bzw. -geschliffen werden und daß die Schalen (1) nach dem aufdrehen bzw. -schleifen getrennt werden, um sie auf den getrennt gedrehten bzw. geschliffenen Leitleisten (2) zu befestigen, so daß jede Zusammenbaufläche (40) einer Schelle auf einer planen Fläche (22) einer Leitleiste befestigt ist.

8. Verfahren zur Herstellung einer Hülse mit mehreren Ausbuchtungen nach Anspruch 6, die an vorgegebenen Stellen mit Filterzonen versehen ist, von welchen jede jeweils eine vorgegebene Länge (1), einen Öffnungswinkel B′ und eine Öffnungsbreite (e) aufweist, dadurch gekennzeichnet, daß man ausgehend von einer Wand, die eine Öffnung mit der Breite (e) besitzt, zylindrische Sektoren (16) mit einer vorgegebenen lichten Weite r, Länge (1) und Öffnungswinkel (B′) herstellt und daß jeder Sektor (16) auf 2 Teilen (4), die Schellen bilden, so befestigt wird, daß er eine Filterschale mit Zentriwinkel B bildet, die mittels der Schellen (4) auf Leitleisten (2) befestigt werden kann, um ein Hülsenelement zu bilden.

9. Verfahren zur Herstellung einer Filterhülse nach Anspruch 8, dadurch gekennzeichnet, daß die Filterwand von einem zylindrischen Rohr gebildet wird, das entlang einer Erzeugenden durchgeschnitten und flach aufgelegt wird, daß eine Platte von den Abmessungen geschnitten wird, die die herzustellende Filterzone hat, daß der Platte die Form eines zylindrischen Sektors (16) mit einem Innenradius r verliehen wird und daß der Sektor auf zwei Teilen befestigt wird, die dazu ausgebildet sind, Befestigungsschellen (4) zu bilden.

10. Verfahren zur Herstellung einer Filterhülse nach Anspruch 9, dadurch gekennzeichnet, daß das zylindrische Rohr (160), von dem ausgehend die Filterplatten hergestellt werden, aus einer Mehrzahl von Stegen (7) besteht, die regelmäßig um eine Achse verteilt sind und auf welchen ein Draht schraubenförmig aufgewickelt ist, der im Querschnitt ein flaches Außenprofil aufweist und dessen Wickelungen voneinander durch einen Spalt (62) von einer Breite e getrennt sind, daß das Rohr entlang einer Ebene P durchschnitten wird, die entlang der Achse verläuft, welche alle Wicklungen schneidet, daß das Rohr flach aufgelegt, dann umgebogen und in die Form einer ausgebauchten Platte (16) mit zylindrischer Innenfläche mit einem Radius r übergeführt wird, die von den platten Flächen (61) der Drahtwicklungen gebildet wird, die vorher auf die Außenseite des ursprünglichen Rohres aufgebracht worden waren, und daß die Stege strahlenförmig auf die Außenfläche aufgebracht werden.

fig 1

fig 2

fig 3

fig 4

fig 5

fig 6

**Fig. 9**

**Fig. 10**

**Fig. 11**

**Fig. 12**

**Fig. 8**

**Fig. 7**